Europäisches Patentamt

European Patent Office

Office européen des brevets

(11) Veröffentlichungsnummer: **0 096 879**
A2

# (12) EUROPÄISCHE PATENTANMELDUNG

(21) Anmeldenummer: **83105741.9**

(22) Anmeldetag: **11.06.83**

(51) Int. Cl.³: **B 01 D 1/18**

(30) Priorität: **15.06.82 DE 3222374**
**16.07.82 DE 3226591**

(43) Veröffentlichungstag der Anmeldung: **28.12.83**
**Patentblatt 83/52**

(84) Benannte Vertragsstaaten: **AT BE CH DE FR GB IT LI LU NL SE**

(71) Anmelder: **Bolz, Alfred sen, Postfach 162, D-7988 Wangen/Allg (DE)**

(72) Erfinder: **Bolz, Alfred sen, Postfach 162, D-7988 Wangen/Allg (DE)**

(74) Vertreter: **Riebling, Günter Dr.-Ing., Dipl.-Ing., Ing.grad. et al, Rennerle 10, D-8990 Lindau (DE)**

(54) **Trockenturm für pulverförmige Stoffe.**

(57) Bei dem Trockenturm für pulverförmige Stoffe erfolgt die Einführung der Heißluft und die Einführung der zu trocknenden Flüssigkeit über eine Trockenluftdüse und Sprühdüsen, die unterhalb des Trockenturms in dessen Bodenbereich angeordnet sind, wobei die für die Lufterwärmung der Heißluftströme notwendigen Aggregate unterhalb des Trockenturms angeordnet sind. Hierdurch ergeben sich wesentliche Vereinfachungen beim Bau und der Installation einer Betriebsanlage sowie verminderte Betriebsgeräusche und verminderte Staub-Emissionen.

-----------------------------------------------

Trockenturm für pulverförmige Stoffe

-----------------------------------------------

Die Erfindung betrifft einen Trockenturm für pulverförmige Stoffe nach dem Oberbegriff des Patentanspruchs
1.

Bei der herkömmlichen Sprüh-Trockenanlagen wird in den
oberen Turmteil sowohl die zu trocknende Flüssigkeit,
wie auch die hierzu dienende Trockenluft eingeführt.
Wegen der Einführung der Flüssigkeit und der Trockenluft im Deckenbereich des Trockenturms wird hierdurch
ein hohes Gebäude notwendig mit entsprechend hohen
Bau- und Installationskosten. Weiter werden hierdurch
die wichtigen Anlagenteile auf zwei oder mehrere Stockwerke verteilt, was nicht nur hohe Installationskosten,
sondern auch hohe Betriebskosten verursacht.
Zudem wird hierdurch die Beaufsichtigung und Bedienung
der gesamten Anlage erschwert, so daß ein mehrköpfiges
Bedienungspersonal erforderlich ist.

Die Erfindung hat sich die Aufgabe gestellt, einen
Trockenturm der eingangs genannten Art so weiterzubilden,
daß dessen Installationskosten, die Betriebskosten und
die Umweltbelastung geringer sind.

Zur Lösung der gestellten Aufgabe ist die Erfindung
dadurch gekennzeichnet, daß die Trockenluftdüse und die
Sprühdüsen unterhalb des Trockenturms in dessen Bodenbereich angeordnet sind, und daß die für die Lufterwärmung des Heißluftstromes notwendigen Aggregate unterhalb des Trockenturms angeordnet sind.

Wesentliches Merkmal der vorliegenden Erfindung ist also, daß sämtliche wichtigen Betriebsorgane auf demselben Niveau konzentriert sind, was in jeder Hinsicht wesentliche Vorteile bietet.

Die Installationskosten werden hierdurch geringer, da nur ein Turm-Leichtbau erforderlich ist, nachdem keine großen Lasten in den oberen Stockwerken angeordnet sind. Es ergeben sich außerdem kürzere Heißluftleitungen mit entsprechend geringeren Verlust-Wärmewerten.

Hierdurch werden auch die Betriebskosten geringer, da geringere Wärmeverluste im Betrieb und im Vorwärmbetrieb gegeben sind; außerdem ist ein Einmann-Betrieb möglich. Wie später noch gezeigt wird, ist auch die Umweltbelastung geringer, da weniger Staub in der Abluft ist und weniger Lärm nach außen dringt. Dies liegt vor allem darin, daß wegen der kürzeren Luftleitungen das gesamte Leitungssystem weniger schwingt und daher auch weniger Lärm verursacht.

Die massive Bauweise bei dieser Anlage endet mit der Decke des Bedienungsgeschosses; auf diese Decke kann ein leichter Stahlbau gestellt werden. Dieser kann nach Montage des Turmes mit einer isolierten Wand verkleidet werden, ebenso die Decke. Hierdurch ergeben sich erhebliche Einsparungen in der Bauweise. Die bisherige Bauweise war vier bis fünf Stockwerke hoch mit zwei bis drei eingezogenen Decken. Der Turm selbst muß nun nach der Erfindung nicht mehr isoliert werden, da die isolierte Bauweise so vorbeheizt werden kann, daß die Turmisolierung entfallen kann.

-3-

Mit dem Patentanspruch 2 ist angegeben, welche wichtigen Teile auf der untersten Ebene und welche wichtigen Teile im Geschoß darüber aufgebaut werden. Wesentlich ist hierbei, daß nur leichtgewichtige Teile im oder neben dem Turmaufbau der Betriebsanlage eingebaut werden, die selbst keiner Überwachung während des Betriebsablaufes bedürfen.

Eine besonders günstige Einbringung der Heißluft und der Flüssigkeit erfolgt dadurch, daß diese zentral in das Unterteil des Trockenturms eingebracht wird. Hierzu ist das Unterteil des Trockenturms nach dem Gegenstand des Anspruches 3 symmetrisch ausgebildet und besteht aus einem erhöhten Mittenbereich, von dem konisch nach unten zulaufende Trichter ausgebildet sind, an deren Grund die Austragsorgane für das getrocknete Pulver angeordnet sind.

Bevorzugt wird der Heißluftstrahl in Verbindung mit der Flüssigkeitseinbringung so eingestellt, daß ein springbrunnenartiger Einblasvorgang in den Trockenturm erfolgt. D.h., die Produkte gelangen nicht bis in den Deckenbereich des Trockenturms, sondern kehren schon vorher aufgrund ihrer Schwerkraft zurück nach unten in Richtung zum Bodenbereich und werden dort von konisch zulaufenden Trichtern aufgefangen und durch die am Grund der Trichter angeordneten Austragsorgane ausgetragen und nachbehandelt.

Nachdem die Produkte nicht bis zum Deckenbereich des Trockenturms gelangen, ist es günstig, daß die Entnahme der Abluft aus dem Trockenturm in der Nähe des Deckenbereichs erfolgt (Anspruch 6).
Hierbei soll dann im wesentlichen vermieden werden, daß mit der abgeführten Luft gleichzeitig zuviel Staub mit abgeführt wird, der die nachgeschalteten Abscheider zu stark belasten kann und zum geringen Teil auch in die Atmosphäre gelangen kann.

Hierdurch wird also die Umweltbelastung aufgrund einer Staub-Emission wesentlich vermindert.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.
Alle in den Unterlagen offenbarten Angaben und Merkmale, insbesondere die in den Zeichnungen dargestellte, räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1: schematisiert gezeichneter Trockenturm für pulverförmige Stoffe;

Figur 2: Trockenturm nach Figur 1 mit vergrößerter Darstellung des Unterteils und anderer Ausführung der Trockenluftdüse.

Die Frischluft wird zunächst über die Frischluftansaugung 6 und einem dort angeordneten Ventilator in den Lufterwärmer 8 eingebracht. Dort wird die Luft über einen öl- oder gasbeheizten Brenner (Brennstoffzuführung 7) aufgeheizt und nach Passieren eines Abscheiders 19 zunächst im Anwärmbereich des Lufterwärmers 8 über eine
umzustellende Ventilklappe 18 über die Leitung (Vorwärmluftabführung 10) in das Fabrikgebäude eingeführt,
um die Aggregate von außen vorzuwärmen. Nach Erreichen
der Betriebstemperatur des Lufterwärmers 8 wird die
Ventilklappe 18 umgestellt, so daß die Trockenluft
nun über die Trockenluftdüse 2 zentral über den Mittenbereich 36 des Trockenturms in den Trockenturm 1
eingeblasen wird. Wesentlich hierbei ist, daß der
Mittenbereich 36 des Trockenturms erhöht ist gegenüber
den seitlich radial aussenliegenden Bereichen. Hierdurch wird gewährleistet, daß sich das Trockengut
in den vertieften Trichtern 34 des Trockenturms 1
ablagert und die Trockenluftdüse dieses abgelagerte
Gut nicht mehr mitreisst. Die Seitenwände 35 des Trichters 34 laufen hierbei konisch nach unten zu.

Bevor das zu trocknende Gut in den Turm eingeführt wird,
wird zunächst durch die Flüssigkeitsleitung Wasser in
den Turm gespritzt und zwar in einer solchen Menge,
wie es ungefähr dem späteren Feuchtigkeitsgehalt des
zu trocknenden Gutes entspricht. Hierbei wird eine Vorwärmung des Innenraumes des Trockenturmes 1 gewährleistet.

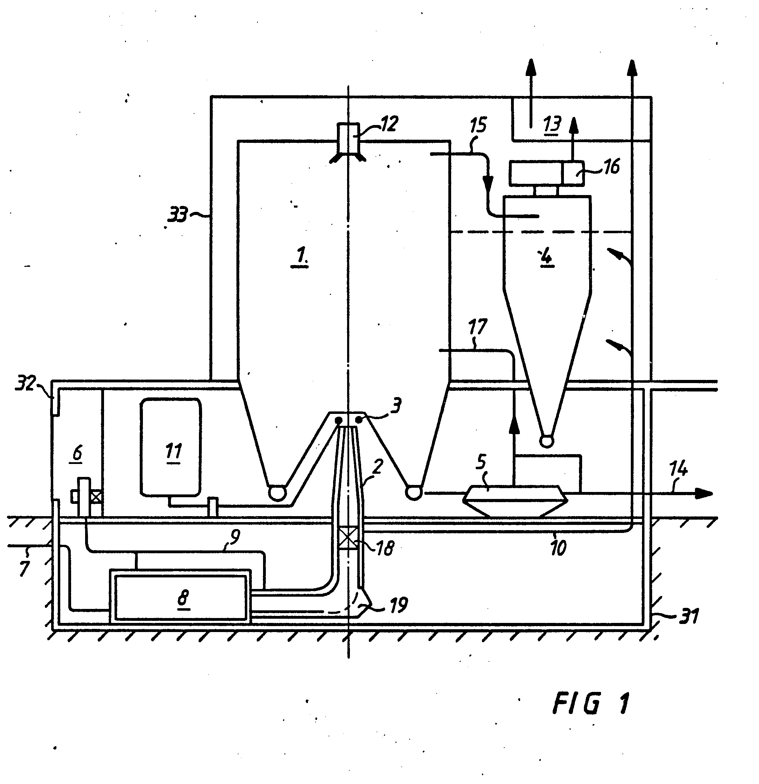

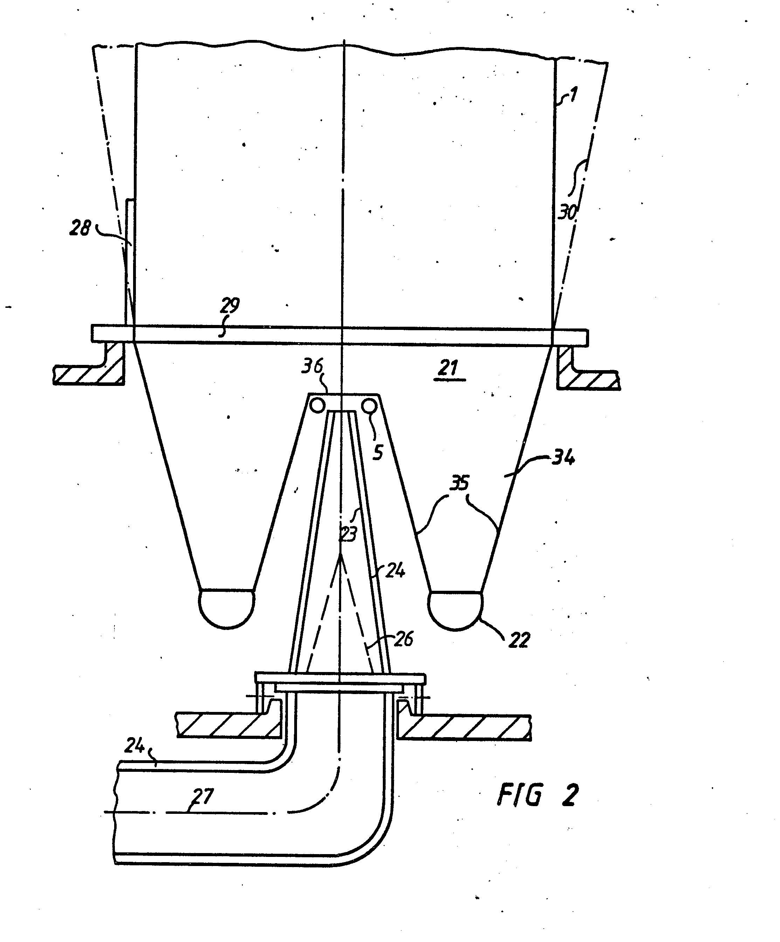

Nach dieser Vorwärmung wird dann das zu trocknende Gut
durch eine Hochdruckpumpe aus dem Flüssigkeitstank 11
den Flüssigkeitsdüsen 3 in den Heißluftstrahl seitlich
oder zentral eingespritzt. Die Einführung dieser zu
trocknenden Flüssigkeit erfolgt über die Flüssigkeitsdüsen 3 in Fig. 1 bzw. Flüssigkeitsdüsen 25 in Figur 2.

Das zu trocknende Gut kann sowohl ein Lebensmittelprodukt,
als auch ein chemisches oder pharmazeutisches Produkt
sein.

-6-

Die Produkte liegen immer flüssig vor und werden aus dem Flüssigkeitstank 11 in der beschriebenen Art in den Trockenturm 1 eingeführt.

Das getrocknete Gut wird über die am Grund der Trichter 34 befindlichen Austragsorgane 22 (Anspruch 7, Fig. 2) ausgetragen und in einen Nachtrockner 5 eingeführt. Von dem Nachtrockner 5 aus wird ein bestimmter Luftstrom wieder über die Leitung 17 zurück in den Trockenturm 1 eingespeist, der Nachtrockner 5 ist beispielsweise als Wirbelschicht-Abscheider ausgebildet; durch den Austritt 14 wird dann das getrocknete Gut entnommen.

Die feuchte Abluft und ein Teil des Staubes, der sich im Trockenturm 1 ausbildet, wird über die Leitung 15 einem Pulverabscheider 4 zugeführt, der beispielsweise als Zentrifugalabscheider ausgebildet ist. Statt der Anordnung eines einzigen Zentrifugalabscheiders können auch mehrere, beispielsweise zwei, vorgesehen sein. An der Oberseite des Zentrifugalabscheiders ist ein Ventilator 16 angeordnet. Der Ventilator 16 entnimmt die Luft aus dem Turm über die Leitung 15 und führt sie einer Vorrichtung (Anspruch 9) 13 zu, von wo sie in der Atmosphäre eingeleitet wird. Es ist natürlich ebenso möglich, noch eine indirekte Aufheizung der einzuführenden Frischluft vorzunehmen, indem man einen weiteren Wärmeaustauscher anordnet. Ebenso kann die zu trocknende Flüssigkeit durch einen solchen Wärmeaustauscher noch vorgewärmt werden.

Gemäss Figur 2 ist es vorgesehen, daß die Trockenluftdüse 23 von einem Doppelmantel umgeben ist, in dessen Außenbereich eine Zweitluft-Zuführung 24 angeordnet ist. Diese Zweitluft-Zuführung 24 kann ebenfalls über den Ventilator 6 erfolgen oder aber auch durch einen anderen Ventilator. Diese Anordnung hat den Vorteil einer Isolierung der Heißluftleitung und gleichzeitig einer Vorwärmung der Zweitluft durch die Heißluft.

Dadurch, daß die Trockenluftdüse 2 bzw. 23 im Bodenbereich des Trockenturmes 1 angeordnet ist und die Entnahme über die Leitung 15 der Luft am Deckenbereich des Trockenturms stattfindet, wird nach der Erfindung im weitestgehenden Masse vermieden, daß über die Entnahmeleitung 15 Staubteilchen mitgerissen werden.

Bei den bekannten Anordnungen erfolgte die Einblasung von oben, ebenso war die Entnahmeleitung im oberen Bereich bzw. im Mittelbereich des Turmes angesetzt und hierdurch kam es zu einer starken Austragung von Staubteilchen, die den Pulverabscheider 4 beaufschlagten.

Bei der Erfindung kann die Luftmenge einer Trockenluftdüse 2,23 so eingestellt werden, daß sich ein springbrunnenartiger Effekt ergibt, d.h. die eingeführte Luft gelangt nicht bis zur Mündung der Entnahmeleitung 14 im Deckenbereich des Trockenturms und hierdurch wird vermieden, daß der Pulverabscheider 4 zu stark belastet wird. Dadurch wird die Umweltbelastung geringer.

Bezüglich der Trockenluftdüse 2 bzw. 23 können je nach Produkt verschiedenartige Düsentypen verwendet werden.

Dadurch, daß die gesamte Heißluftanlage mit Lufterwärmer und Trockenluftdüse 2,23 im unteren Teil des Gebäudes unterhalb des Trockenturmes angeordnet ist, wird zunächst einmal die natürliche Konvektion der erwärmten Luft dazu verwendet, das gesamte Gebäude aufzuheizen. Zusätzlich ist es möglich, über die Vorwärmluftabführung 10 Luft noch zu entnehmen und hiermit das darüber liegende Gebäude und die sich dort befindlichen Anlagenteile vorzuheizen, so daß sich durch diesen zweifachen Effekt eine wesentlich verbesserte Wärmeausnützung ergibt.

Die Waschanlage 12 an dem Deckenbereich des Trockenturmes dient dazu, beim Produktwechsel oder bei längerer
Fabrikationsunterbrechung den Turm innen zu waschen.

Es wird auch ein geringerer Bedienungsaufwand notwendig,
weil die ganzen Aggregate im unteren Teil des Turmes
angeordnet sind und von unten aus die gesamte Anlage
überwachen kann. Vorher im Deckenbereich des Turmes
angeordnete Aggregate entfallen erfindungsgemäss,
so daß es auch entfällt, dort eine Überwachung vorzunehmen.

Die im Trockenturm-Unterteil 21 mündende Trockenluftdüse 23 ist als Doppelmantel ausgebildet und weist im
Doppelmantel eine Zweitluftzuführung auf, wobei sich
der Doppelmantel bis in das Geschoß, wo der Lufterhitzer steht, 31 des Betriebsgebäudes hinein erstreckt.
Gemäss Figur 2 kann die Trockenluftdüse 23 ein inneres
Drahtfilter 26 aufweisen.

Patentansprüche

────────

1. Trockenturm für pulverförmige Stoffe, bestehend aus einem geschlossenen Behälter, in den über ein oder mehrere Trockenluftdüsen (2,23) ein Heißluftstrom eingeblasen wird, in den über Sprühdüsen (3,25) die zu versprühende Flüssigkeit eingespritzt wird, die im Trockenturm als getrocknete Substanz auf den Boden fällt und durch Austragsorgane ausgetragen wird, d a d u r c h   g e k e n n z e i c h n e t , daß die Trockenluftdüse (2,23) und die Sprühdüsen (3,25) unterhalb des Trockenturmes (1) in dessen Bodenbereich angeordnet sind, und daß die für die Lufterwärmung des Heißluftstromes notwendigen Aggregate (5,6,8,9,10,11) unterhalb des Trockenturms (1) angeordnet sind.

2. Trockenturm nach Anspruch 1, d a d u r c h   g e k e n n z e i c h n e t , daß der Turmaufbau wie folgt getroffen ist:

a. auf der untersten Ebene (31) ist der Lufterwärmer (8), Trockenluftzuleitung mit der Zweitluftzuführung (9) und der Abscheider (19) für Fremdkörper angeordnet;

b. im Geschoß darunter (32) sind der Frischluft-Filter und HD-Ventilator, Trockenluftdüse (2,23) und Flüssigkeitsdüsen (3,25), Bedienungsstand, Austragsvorrichtung und Nachtrockner (5), sowie Kühler und ggf. Flüssigkeitstanks angeordnet;

c. im nächsten Geschoß (33) ist die Reinigungsebene (29) und die Pulverrückführung (17) mit dem Turmaufbau, bestehend aus Pulverabscheider (4) mit Ventilator (16), Ausgleichkammer (13) und die Waschanlage (12) angeordnet.

0096879

-10-

3. Trockenturm nach Anspruch 1 oder 2, d a d u r c h
g e k e n n z e i c h n e t , daß das Unterteil (21)
des Trockenturms (1) rotationssymmetrisch ausgebildet
ist und aus einem erhöhten Mittenbereich (36) besteht,
von dem ausgehend konisch nach unten zulaufende Trichter
(34 ) ausgebildet sind, an deren Grund die Austragsorgane (22) für das getrocknete Pulver angeordnet sind.

4. Trockenturm nach Anspruch 3, d a d u r c h
g e k e n n z e i ch n e t , daß die Trockenluftdüse
(2,23) am Mittenbereich (36) des Unterteils (21) mündet
und vertikal nach oben gerichtet in den Trockenturm (1)
einbläst.

5. Trockenturm nach Anspruch 3 oder 4,
d a d u r c h   g e k e n n z e i c h n e t , daß die
Trockenluftdüse (23) radial von einem Doppelmantel
umgeben ist, über den die Zweitluftzuführung (24)
erfolgt.

6. Trockenturm nach einem der Ansprüche 1 - 5,
d a d u r c h   g e k e n n z e i c h n e t ,
daß die Entnahme der Abluft aus dem Trockenturm
in der Nähe des Deckenbereichs erfolgt, (Leitung 15).

7. Trockenturm nach einem der Ansprüche 1 - 6,
d a d u r c h   g e k e n n z e i ch n e t , daß das
Austragsorgan auch als Fließbett, Schnecke, Schüttelrinne oder Schleuse ausgebildet werden kann.

8. Trockenturm nach einem der Ansprüche 1-6,
d a d u r c h   g e k e n n z e i c h n e t , daß die
Konusenden der Austragstrichter mit Lochblechmantel versehen ist, durch welchen zusätzlich Trockenluft zugeführt
werden kann.

-11-

9. Trockenturm nach einem der Ansprüche 1 - 6, d a d u r c h   g e k e n n z e i c h n e t , daß die nach dem Abscheider noch vorhandenen Staubreste in einer speziellen Vorrichtung entfernt werden können, z.B. Expansionskammer, Verbrennungskammer, Waschkammer, Luftfilter.

FIG 1

0096879

FIG 2